# EUROPEAN PATENT SPECIFICATION

(11) **EP 0 619 451 B1**
(45) Date of publication and mention of the grant of the patent: **31.03.1999**
(21) Application number: 94105570.9
(22) Date of filing: 08.05.1989
(51) Int. Cl.: F16L 55/165

(54) **Apparatus for lining existing pipes**
Vorrichtung zum Auskleiden von verlegten Rohren
Dispositif pour revêtir des conduites existentes

(30) Priority: 09.05.1988 GB 8810894
(43) Date of publication of application: 12.10.1994
(62) Divisional of application: 93300850.0
(73) Proprietor: BG plc, Reading, Berkshire RG6 1PT (GB)
(72) Inventor: McGuire, Brian Edward, Oldham OL2 7RW, Greater Manchester (GB)
(74) Representative: Morgan, David James

(56) References cited:
- GB-A- 807 413
- GB-A- 2 186 340
- US-A- 3 462 825

## Description

This invention relates to apparatus for the lining of existing pipes. The invention will be described in relation to gas, oil and water supply pipes, but it will be appreciated that the invention is applicable to pipes of all kinds.

When lining pipes (which pipes when ground embedded are prone to crack due to ground movement) it is known to draw a heated liner of plastic tube through a die to reduce the diameter and then into a length of the existing pipe.

The present invention relates to an improved apparatus for lining installed pipework when using a swaging die to reduce the diameter of the liner pipe prior to its being drawn into the existing pipework. By "installed" pipework is meant pipework that has already been installed in position to carry out its intended purpose, such as for example, ground embedded pipework for gas, oil water or sewage, pipework forming part of a larger installation such as in oil or gas refinery or storage installation, or pipework resting on the ground and laid down to connect a source of supply to the recipient such as an oil pipe connecting a well to a refinery or port.

In the case of ground embedded pipework it will be appreciated that the normal arrangement when such a process is being carried out will involve a winch adjacent to an excavation at one end of a length of pipe to be lined, whence a cable or similar flexible ligament passes through the length of pipe to a second excavation beyond which it is attached to the front end of a liner pipe of plastics material. Adjacent to the second excavation is a tube heating and compressing apparatus which has a heater and a size reduction die. At a downstream end of this apparatus there may be a reciprocatable "pusher" which can grip the pipe and draw it from the apparatus and urge it towards the pipe to be lined.

GB 807413 (Tubovit) relates to a process for the lining of pipes of non-thermoplastic material with a liner of synthetic thermoplastic resin, the process comprising the steps of passing a synthetic resin liner having a mean outer diameter greater than the inside diameter of the non-thermoplastic pipe through a die having an inside diameter less than the original mean outer diameter of the resin liner and less than or substantially equal to the inner diameter of the non-thermoplastic pipe, after having heated said resin liner to a temperature at which the synthetic resin undergoes deformations which may be temporarily set by cooling but are substantially eliminated by subsequent heat treatment, introducing the synthetic resin liner after its passage through the die into the non-thermoplastic pipe and subjecting the resin liner, when it has been inserted in the non-thermoplastic pipe, to a heat-treatment comprising the steps of bringing said resin liner to a temperature sufficiently high so that the deformations due to the passage of the liner through the die are eliminated to the extent allowed by the presence of the non-thermoplastic pipe.

US 3462825 (Pope) relates to a method of tightly lining a tubular member with a fluorocarbon resin liner having an outside diameter substantially greater than the inside diameter of the tubular member, comprising the steps of securely gripping one end of the liner for axial tensioning and pulling, progressively pulling the liner thought a reduction die for reducing the liner to an outside diameter slightly less than the inside diameter of the tubular member and then through and into the tubular member without relaxing the pulling tension, releasing the gripped end of the liner and allowing the freed liner to expand into tight engagement with the inner wall of the tubular liner.

According to the present invention there is provided apparatus for lining installed pipework comprising a support structure, a swaging die disposed within the structure for reducing the diameter of a liner pipe passed through it, fixing means for enabling the structure to be fixed to the pipe to be lined, the fixing means being adapted to fix the structure at a spacing from the pipework, there being means located within the spacing to cool the heated liner pipe as it emerges from the die, characterised in that means for for heating the die is provided so that the liner pipe is heated before it emerges from the die.

The present invention envisages in a preferred aspect of its operation the employment of a swaging die that is provided with a surface which, or part of which, is inclined at an angle between 6 degrees and 32 degrees there being no part at an angle of more than 32 degrees to the dies axis and which extends over an axial length that is at least 70% of the axial distance between the part where the liner pipe engages with such surface and the part where the liner pipe disengages from the die.

Dies used according to the prior art methods of pipe swaging as employed in practice have comprised two portions, the first being the inclined swaging surface reducing in diameter to a minimum value and the second being an axial continuation of the die interior having its walls parallel to the die axis and an internal diameter equal to such minimum value. We have found that in the carrying out of the present invention, it is advantageous to reduce the axial length of the said second portion relative to the axial length of the first portion, or else to dispense with the second portion altogether. In particular, by so designing the die that the first part extends over an axial distance that is at least 70%, and preferably over 80%, and advantageously over 85% of the axial distance between the part where the liner pipe engages with the inclined surface and the outlet orifice where the pipe emerges from the die, the pulling tension required to swage the liner pipe is substantially decreased. Another consequence of the use of such a die in the carrying out of the present invention is that, when using a liner pipe of synthetic hydrocarbon resins such as polyethylene or modified polyethylene as conventionally used in practice, the liner pipe on emerging from such outlet orifice manifests a greater tendency towards radial expansion relative to the degree of swaging exerted by the die than in the case where, as in the prior art, the swaging die was provided with a second portion as mentioned above of substantial length, typically in the order of 50% of the overall die length. On release of pulling tension such tendency will result in a greater proportional radial expansion in relation to the pulling tension employed than would have occurred using the prior art dies.

The process relies both upon the expansion of the liner pipe within the pipework as a result of relaxation of the pulling tension and also as a result of the memory induced expansion of the swaged liner pipe. By the use of a die having a reduced axial length of its second portion relative to the axial length of its first portion as mentioned above the proportionate expansion resulting from the relaxation of the pulling tension may be significantly increased thus resulting in improved control over the pipe lining operation.

The arrangements described above furthermore provide a significant advantage in relation to the case where a "pusher" device as e.g. of the kind described in our copending Patent Application GB-A-2 215 804 published 27.09.1989 is used. It is inherent in the operation of such a pusher that, when it grips the liner pipe and urges it towards the pipework to be lined, there is experienced a temporary reduction in the pulling tension exerted by the pulling device (such as a winch) at the far end of the pipework. Upon the pusher releasing its grip, the tension resorts back to its original value. In practice, this results in a continuous fluctuation in the tension. It is desirable that the changeover between maximum and minimum tensions in the course of the fluctuations be affected as smoothly as possible and with the minimum amount of sharp transitions or jerks.

We have found that as a result of the preferred use of the dies of the present invention which require substantially lower pulling tensions to effect a comparable degree of swaging as compared with prior art dies and which furthermore bring about a greater "springback" tendency on the part of the pipe emerging from the die orifice, the amplitudes of the fluctuations are reduced and the fluctuations themselves become smoother. Having regard to the very high forces involved in exerting the pulling tension, this again constitutes a significant improvement in both the safety and the efficiency of the operations.

The length of the pipework which may be lined in a single operation by the method of this invention may typically be from 10 metres upwards. The limiting length of pipework which may be lined in any particular case will depend upon a combination of factors including the friction resistance to the movement of the liner within the pipework, the extent to which the liner pipe with reduced diameter after insertion into the pipework becomes subject to deformation (a problem encountered with larger diameter liner pipes of relatively large SDR ratio), the limiting tension on the leading end of the liner pipe beyond which it may suffer permanent damage or elongation, the capacity of the mechanism (such as a winch) operating the pulling means and the uniformity of diameter and/or direction or otherwise of the pipework interior. The most suitable practicable length to be lined in any particular case can readily be ascertained by trial and error. By the method of the present invention, it becomes possible to line lengths of pipework up to 450 metres known in the art. It is preferred that such surface finish should be at least down to N7 typically down to N6 preferably down to N5 and ideally in the order of N4 or lower.

It has been found advantageous to employ a die having a relatively shallow angle of inclination of the inclined surface of the die to the die axis and within the range of 12 degrees to 29 degrees and preferably from 20 degrees to 25 degrees. Reduction of the angle assists in reducing the pulling load required to effect compression of the liner pipe but at the same time increases the area of the swaging surface for any given degree of compression. The optimum angle will be that which, in any particular case, minimises the overall disadvantages of a highload to bring about compression on the one hand and a large friction inducing die surface area on the other hand. The die surface may be frusto conical in shape. Alternatively, it may have a variable angle of inclination to the die axis within the above stated limits. It is a significant and advantageous feature of the present invention that when using a liner pipe made of a deformable memory retaining material in accordance with the method of the invention, the liner pipe may be left to expand radially within the lined pipework and under the influence of the memory of the material constituting it. By suitable choice of initial diameter of the liner pipe, degree of compression during the swaging operation and die orifice diameter in relation to the internal diameter of the pipework to be lined, the present invention can bring about the provision of a close fitting lining to the pipework resulting, (following relaxation of tension), from the memory induced expansion of the pipelining at the ambient temperatures and pressure within the pipework. It is unnecessary to have recourse to the means provided by the prior art for expanding the pipe lining within the pipework such as the application of internal super atmospheric pressure or the application of heat to the pipelining from within or the initial application of very high stretching forces to the pipelining to bring about an initial reduction in its diameter prior to insertion into the pipework. The precise operating conditions employed in order to carry out the method of the present invention will depend upon the several factors referred to above in any particular case and will vary according to the pipework internal diameter and the purpose for which it is put to use (for example whether for water or gas), the material of the pipelining and the SDR of the pipelining. (By SDR is meant the ratio of the diameter of the pipelining before swaging to its wall thickness).

A preferred material for the liner pipe is polyethylene, but other materials having the necessary memory retaining characteristics, such as a co-polymer of ethylene and at least one alphaolefin of up to ten carbon atoms may equally be used. Although the reduction in diameter of the liner pipe during passage through the swaging die may be up to 15%, reductions in the range 5.0% to 9.8% are preferred. The reduction should be such as to allow drawing of the liner pipe through the existing pipe. This somewhat simple requirement is complicated by the fact that existing pipes are often not accurately sized internally, that the internal diameter may vary along the length of the pipe, and that the rate of recovery of the liner pipe may vary with ambient conditions and with the material from which the pipe is made. The wall thickness of the liner pipe should be as thin as possible consistent with the use to which the pipe is to be put and the requirement to provide adequate internal sealing of the existing pipe. A ratio of wall thickness to diameter of the liner pipe in the range 10 to 46 is preferred.

The maximum tension chosen for pulling the liner pipe through the existing pipe should advantageously be in the range 45% to 55% of the yield strength of the liner pipe in question, and in particular about 50%. The ratio of the throat diameter of the die to the diameter of the existing pipe should advantageously be in the range 1.05:1 to 1.15:1. A reciprocatable pusher may be employed to augment the tension exerted by the said pulling means to draw the liner pipe through the swaging die.

In order that the invention may be more clearly understood one embodiment of the invention will now be described by way of example, with reference to the accompanying drawings, in which:-
Figure 1 is a side elevational view in section of one form of apparatus according to the invention, and
Figure 2 is a side elevational view in section of a modification of the apparatus shown in Figure 1.

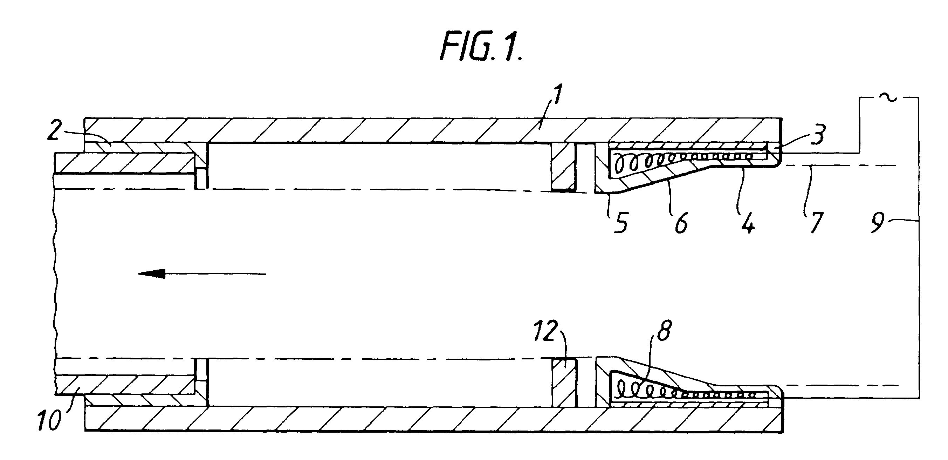

Referring to Figure 1, the apparatus comprises a supporting structure 1 which incorporates a pipe clamp 2 at one end and a swaging die 3 at the other. The swaging die 3 is generally cylindrical and comprises a section of larger diameter 4 joined to a section of smaller diameter 5 by a conical section 6. The swaging die has a polished swaging surface which is inclined at an angle of between 6 degrees and 32 degrees to the axis of the die advantageously between 12 degrees to 29 degrees and preferably between 20 degrees to 25 degrees. The polish is at least down to N7, typically down to N6 preferably down to N5 and ideally in the order of N4 or lower. The ratio between the diameters at 4 and 5 is preferably in the range 1.05:1 to 1.15:1. This has been found to provide an adequate level of clearance between pipe liner and internal pipe diameter for most normal pipes and to be comfortably within the diametric dimensional recovery of the material.

The body of the die 3 in the embodiment illustrated is hollow and houses an electrical heating coil 8 which is supplied with electricity via an electrical supply circuit 9. Power supply to the heating coil is applied to heat the liner pipe to a temperature within the range 35 degrees centigrade to 95 degrees centigrade and preferably to about 50 degrees centigrade. On leaving the die, the swaged liner pipe is cooled by means of an annular heat exchanger 12 which is disposed around the pipe and which extracts heat from the pipe. The heat exchange medium may be carbon dioxide, air, water or any other suitable fluid.

The pipe clamp 2 is fixed to the free end of existing pipe and provides in conjunction with the existing pipe, referenced 10, an anchor against which the liner pipes 7 may be pulled. The supporting structure to which the pipe clamp is connected may be tubular in form or may consist of a plurality of arms connecting the pipe clamp 2 and swaging die 3 together.

In operation of the apparatus, a length of liner pipe 7 of polyethylene or other suitable material may be mitred at one end or pre-formed effectively to form a nose cone may be fitted. A ratio of wall thickness to diameter of the liner pipe in the range 10 to 46 is preferred. Holes are punches in the mitre sections which correspond with those in the metal nose cone and through which a cable is connected to the pipe. The cable is threaded through the swaging die 3 and the existing pipeline and connected to some form of pulling device such as a winch appropriately anchored. The electrical supply is switched on to heat the die to the required temperature and the mitred end of the liner pipe is introduced into the upstream end of the die. Tension in the cable is increased to the required value (usually between 45% and 55% of the yield strength of the liner pipe in question and in particular 50%) until the liner pipe begins to move through the existing pipe. The cable is released and the memory characteristic of the material of the pipe is then permitted to expand the pipe until it contacts the internal surface of the existing pipe.

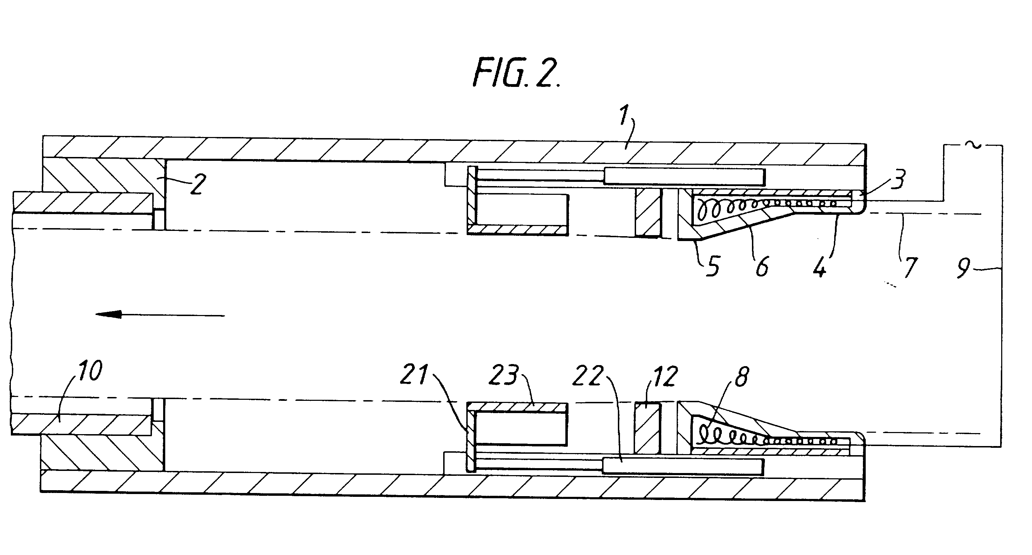

If desired, the pipe may be assisted through the existing pipe by means of a liner pipe pusher machine. Such an arrangement is illustrated in Figure 2 of the drawings. Referring to this figure, the pusher machine, which generally comprises a frame 21, hydraulic cylinder 22, clamp ring 23 and ancillaries is disposed between the swaging die 3 and pipe clamp 2. In operation, this machine pulls the liner pipe through the swaging die 3 and pushes it into the existing pipeline.

It will be appreciated that the above embodiments have been described by way of example only and that many variations are possible. For example the liner pipe may be heated prior to entry into the swaging die stretches as in the manner described in our copending Application No. 2186340.

## Claims

1. Apparatus for lining installed pipework comprising a support structure, a swaging die disposed within the structure for reducing the diameter of a liner pipe passed through it, fixing means for enabling the structure to be fixed to the pipe to be lined, the fixing means (2) being adapted to fix the structure at a spacing from the pipework (10) there being means (12) located within the spacing to cool the heated liner pipe as it emerges from the die (3), characterised in that means is provided for heating the die (3) so that the liner pipe is heated before it emerges from the die(3).

2. Apparatus as claimed in claim 1, characterised in that the die (3) has a hollow body in which there are located the means (8) for heating the die (3).

3. Apparatus as claimed in claim 2, characterised in that the heating means (8) comprises an electrical heating coil (8) which in use is supplied with electricity by way of an electrical supply circuit.

4. Apparatus as claimed in any of claims 1 to 3, characterised in that the swaging die is provided with a swaging surface which, or part of which, is inclined at an angle between 6 degrees and 32 degrees and no part at an angle of more than 32 degrees to the die axis.

5. Apparatus as claimed in any of claims 1 to 4, characterised in that the angle of inclination of the swaging surface is between 12 degrees and 29 degrees.

6. Apparatus as claimed in claim 5, characterised in that the angle of the swaging surface is between 20 degrees and 25 degrees.

7. Apparatus as claimed in any of claims 1 to 6, characterised in that the inclined surface extends over an axial length that represents a proportion of at least 70% of the overall axial distance between that part of the swaging surface that has the maximum diameter and the die outlet.

8. Apparatus as claimed in claim 7, characterised in that the proportion is at least 80%.

9. Apparatus as claimed in claim 8, characterised in that the proportion is at least 85%.

10. Apparatus as claimed in any of claims 1 to 9, characterised in that the walls of that part of the die interior that extends between the said swaging surface and the outlet are parallel to the die axis.

## Patentansprüche

1. Vorrichtung zum Auskleiden von verlegten Rohren mit einem Halteaufbau, einer Ziehmatrize innerhalb des Aufbaus zur Reduzierung des Durchmessers eines durch sie hindurch bewegten Auskleidungsrohres, mit einer Befestigungseinrichtung zum Befestigen des Aufbaus am auszukleidenden Rohr, wobei die Befestigungseinrichtung (2) den Aufbau mit einem Zwischenraum zum Rohrwerk (10) befestigt und Mittel (12) innerhalb des Zwischenraumes zum Kühlen des erhitzten Auskleidungsrohres bei seinem Austritt aus der Matrize (3) vorgesehen sind, dadurch gekennzeichnet, daß eine Einrichtung zum Beheizen der Matrize (3) vorgesehen ist, so daß das Auskleidungsrohr vor seinem Austritt aus der Matrize (3) erhitzt wird.

2. Vorrichtung nach Anspruch 1, dadurch gekennzeichnet, daß die Matrize (3) einen Hohlkörper aufweist, in dem die Einrichtung (8) zum Beheizen der Matrize (3) angeordnet ist.

3. Vorrichtung nach Anspruch 2, dadurch gekennzeichnet, daß die Heizeinrichtung (8) eine elektrische Heizschlange (8) aufweist, die bei Gebrauch über einen elektrischen Versorgungsstromkreis mit Strom beliefert wird.

4. Vorrichtung nach einem der Ansprüche 1 bis 3, dadurch gekennzeichnet, daß die Ziehmatrize mit einer Einschnürungsfläche ausgestattet ist, die, oder von der ein Teil, in einem Winkel zwischen 6 Grad und 32 Grad und kein Teil in einem Winkel von mehr als 32 Grad zur Matrizenachse geneigt ist.

5. Vorrichtung nach einem der Ansprüche 1 bis 4, dadurch gekennzeichnet, daß der Neigungswinkel der Einschnürungsfläche zwischen 12 Grad und 29 Grad beträgt.

6. Vorrichtung nach Anspruch 5, dadurch gekennzeichnet, daß der Winkel der Einschnürungsfläche zwischen 20 Grad und 25 Grad beträgt.

7. Vorrichtung nach einem der Ansprüche 1 bis 6, dadurch gekennzeichnet, daß die geneigte Fläche sich über eine axiale Länge erstreckt, die einen Anteil von mindestens 70 % der gesamten axialen Strecke zwischen demjenigen Teil der Einschnürungsfläche, der den Maximaldurchmesser hat, und dem Matrizen-Auslaß ausmacht.

8. Vorrichtung nach Anspruch 7, dadurch gekennzeichnet, daß der Anteil mindestens 80 % beträgt.

9. Vorrichtung nach Anspruch 8, dadurch gekennzeichnet, daß der Anteil mindestens 85 % beträgt.

10. Vorrichtung nach einem der Ansprüche 1 bis 9, dadurch gekennzeichnet, daß die Wandung desjenigen Teils des Matrizeninneren, der sich zwischen der Einschnürungsfläche und dem Auslaß erstreckt, parallel zur Matrizenachse verläuft.

## Revendications

1. Dispositif destiné à revêtir intérieurement des conduites installées comprenant une structure de support, une matrice de rétreinte disposée à l'intérieur de la structure pour réduire le diamètre d'une conduite de revêtement intérieur qui la traverse, des moyens de fixation destinés à permettre la fixation de la structure à la conduite à revêtir intérieurement, les moyens de fixation (2) étant susceptibles de fixer la structure à une certaine distance des conduites (10), des moyens (12) étant situés à l'intérieur de l'espace pour refroidir la conduite de revêtement intérieur chauffée au moment où elle débouche de la matrice (3), caractérisé en ce que des moyens sont prévus pour chauffer la matrice (3) de sorte que la conduite de revêtement intérieur est chauffée avant qu'elle ne débouche de la matrice (3).

2. Dispositif selon la revendication 1, caractérisé en ce que la matrice (3) a un corps creux dans lequel se trouvent les moyens (8) destinés à chauffer la matrice (3).

3. Dispositif selon la revendication 2, caractérisé en ce que les moyens de chauffage (8) comprennent une bobine de chauffage électrique (8) qui, en fonctionnement, est alimentée en électricité au moyen d'un circuit d'alimentation électrique.

4. Dispositif selon l'une quelconque des revendications 1 à 3, caractérisé en ce que la matrice de rétreinte est pourvue d'une surface de rétreinte qui, tout entière ou en partie, est inclinée à un angle entre 6 degrés et 32 degrés, et aucune partie n'est inclinée à un angle supérieur à 32 degrés par rapport à l'axe de la matrice.

5. Dispositif selon l'une quelconque des revendications 1 à 4, caractérisé en ce que l'angle d'inclinaison de la surface de rétreinte est entre 12 degrés et 29 degrés.

6. Dispositif selon la revendication 5, caractérisé en ce que l'angle de la surface de rétreinte est entre 20 degrés et 25 degrés.

7. Dispositif selon l'une quelconque des revendications 1 à 6, caractérisé en ce que la surface inclinée s'étend sur une longueur axiale qui représente une proportion d'au moins 70 % de la distance axiale totale entre la partie de la surface de rétreinte qui a le diamètre maximal et la sortie de la matrice.

8. Dispositif selon la revendication 7, caractérisé en ce que la proportion est au moins de 80 %.

9. Dispositif selon la revendication 8, caractérisé en ce que la proportion est au moins de 85 %.

10. Dispositif selon l'une quelconque des revendications 1 à 9, caractérisé en ce que les parois de la partie de l'intérieur de la matrice qui s'étend entre ladite surface de rétreinte et la sortie sont parallèles à l'axe de la matrice.
